# EUROPÄISCHE PATENTSCHRIFT

(11) **EP 2 128 482 B1**
(45) Veröffentlichungstag und Bekanntmachung des Hinweises auf die Patenterteilung: **29.09.2010**
(21) Anmeldenummer: 09006872.7
(22) Anmeldetag: 22.05.2009
(51) Int. Cl.: F16F 9/50

(54) **Schwingungsdämpfer mit amplitudenabhängiger Dämpfkraft**
Vibration damper with amplitude-dependent damping force
Amortisseur d'oscillations doté d'une force d'amortissement dépendant de l'amplitude

(30) Priorität: 29.05.2008 DE 102008002062
(43) Veröffentlichungstag der Anmeldung: 02.12.2009
(73) Patentinhaber: ZF Friedrichshafen AG, 88038 Friedrichshafen (DE)
(72) Erfinder: Hammer, Thomas, 97653 Bischofsheim (DE)

(56) Entgegenhaltungen:
- DE-B- 1 264 165
- DE-C- 828 201
- US-A- 4 635 766

## Beschreibung

Die Erfindung betrifft einen Schwingungsdämpfer mit amplitudenabhängiger Dämpfkraft entsprechend dem Oberbegriff von Patentanspruch 1.

Als eine von mehreren Möglichkeiten ist es aus dem Stand der Technik bekannt, bei einem Schwingungsdämpfer im Hinblick auf eine amplitudenabhängige Dämpfkraft einen Dämpfkolben axial beweglich zu einer Kolbenstange auszuführen. Eine derartige Bauweise ist beispielsweise aus der DE 197 38 617 C2 bekannt. Ein mit Ventilscheiben bestückter Ventilkolben wird axial von beidseitigen Tellerfedersätzen gehalten. Bei einer Kolbenstangenbewegung können die Tellerfedersätze axial vorgespannt werden, so dass ein Kolbenstangenhubweg mit verminderter Dämpfkraft zurückgelegt wird. Die weitere Kolbenstangenbewegung in dieselbe Richtung bewirkt über die Dämpfventile eine erhöhte Dämpfkraft. Am Ende einer Kolbenstangenbewegung wird der Kolben von den Tellerfedersätzen in die Ausgangsposition zurückbewegt.

In der DE 1 264 165 A1 ist ein hülsenförmiger Kolben axial beweglich zu einer Kolbenstange gelagert. An der Kolbenstange ist ein doppeltwirkender Anschlag für den Kolben befestigt. Bei dieser Variante steht nur ein kleiner Bauraum für Ventilscheiben zur Verfügung.

Eine ähnliche Variante ist aus der DE 828 201 bekannt, die am Kolbenventil offensichtlich nur eine Ventilscheibe für die Bedämpfung einer Kolbenstangeneinfahrbewegung aufweist.

Die Aufgabe der vorliegenden Erfindung besteht darin, einen Schwingungsdämpfer mit amplitudenabhängiger Dämpfkraft zu realisieren, bei der ein axial bewegliches Kolbenventil verwendet wird und eine sehr leichte Adaptiermöglichkeit an einen konventionellen Schwingungsdämpfer möglich ist.

Erfindungsgemäß wird die Aufgabe dadurch gelöst, dass die Kolbenstange zweigeteilt ausgeführt ist und der Kolben an einem ersten Kolbenstangenabschnitt fixiert ist, dessen anderes Ende in einem Gehäuse an einem zweiten Kolbenstangenabschnitt zwischen zwei Anschlagflächen beweglich ist.

Der große Vorteil der Erfindung besteht darin, dass ein konventioneller Kolben mit Ventilscheibenbestückung verwendet werden kann. Dadurch kann der Schwingungsdämpfer sehr gut auf ein bestimmtes Fahrverhalten abgestimmt werden, ohne dass bauliche Gegebenheiten hinderlich sind, z. B. durch zu kleine Ventilscheiben oder Durchlassquerschnitte zu den Ventilscheiben, so dass wiederum ein weiches Ansprechverhalten kaum realisierbar wäre.

Die axiale Kolbenbewegung verläuft gezielt gedämpft, indem der erste Kolbenstangenabschnitt einen Trennkolben trägt, der mit mindestens einem Anschlusskanal in der Gehäusewandung ein Drosselventil bildet.

Zur Vermeidung von einem unerwünschten Unterdruck in einer Arbeitskammer des Gehäuses, wodurch die Kolbenbewegung behindert wäre, wird dadurch vermieden, dass mindestens eine Arbeitskammer des Gehäuses ein in Zuströmrichtung in die Arbeitskammer öffnendes Rückschlagventil aufweist.

Im Hinblick auf einen einfachen Aufbau und Montage der Rückschlagventile weist das Gehäuse einen separaten Deckel auf, in dessen Stirnfläche das Rückschlagventil angeordnet ist.

Wenn der Kolben eine axiale Endstellung bezogen auf das Gehäuse eingenommen hat, dann steht außerhalb der mindestens einen Arbeitskammer mindestens ein Bypass zwischen einem der Arbeitsräume im Zylinder und einem Zwischenraum zwischen dem Gehäuse und dem Kolben zur Verfügung, um das Dämpfmedium von einem Arbeitsraum in den anderen Arbeitsraum des Zylinders strömen zu lassen.

Der Bypass wird von einer ganz einfachen Axialnut in der Außenwandung des Gehäuses gebildet.

Bei einer weiteren Ausführungsform ist an beiden Kolbenstangenabschnitten jeweils ein Kolben mit Ventilscheiben angeordnet. Ein derartiger Schwingungsdämpfer erzeugt stets eine Grunddämpfkraft, die amplitudenabhängig zunimmt.

Das Gehäuse verfügt über eine ringförmige Arbeitskammer und über eine vollzylindrische Arbeitskammer, deren Volumen vom Durchmesser des Trennkolbens bestimmt wird. Zum Ausgleich der Volumen der beiden Arbeitskammern ist mindestens eine Arbeitskammer über einen Ausgleichskanal in einem Kolbenstangenabschnitt mit einem der Arbeitsräume verbunden.

Im Hinblick auf eine freie Dimensionierung der Anschlusskanäle der Arbeitskammern wird der Ausgleichskanal wegabhängig freigegeben. Wenn die Anschlusskanäle wirken sollen, wird der Ausgleichskanal abgeschaltet.

Dazu weist der Ausgleichskanal eine Radialöffnung auf, die mit einem Deckel des Gehäuses ein Schieberventil bildet. Über diese Schieberventilfunktion ist zwangsläufig eine funktionsgerechte Schaltung des Schieberventils gewährleitstet.

Zusätzlich kann zwischen den beiden Arbeitskammern ein Verbindungskanal bestehen. Dieser Verbindungskanal dient zusätzlich dem Volumenaustausch zwischen den Arbeitskammern.

Konstruktiv besonders einfach wird der Verbindungskanal von einer Nut im Gehäuse gebildet wird.

Der Verbindungskanal weist eine kürzere axiale Erstreckung auf als der Abstand der beiden Anschlusskanäle der Arbeitskammern. Damit wird erreicht, dass die Bewegung des Trennkolbens in Richtung seiner Endlagen besonders effektiv durch die von den Anschlusskanälen gebildeten Drosselventilen gedämpft wird.

In einer weiteren Ausbaustufe kann der Trennkolben zumindest für eine Relativbewegungsrichtung zum Gehäuse mit einem Dämpfventil bestückt sein, so dass eine weitere Verschiebekrafterhöhung für den Trennkolben relativ zum Gehäuse erreicht wird.

Anhand der folgenden Figurenbeschreibung soll die Erfindung näher erläutert werden. Es zeigt:
- Fig. 1: Schwingungsdämpfer mit verschiebbaren Kolbenstangenabschnitt
- Fig. 2: Schwingungsdämpfer nach Fig. 1 mit zusätzlichen Dämpfungsmitteln für die Bewegung des verschiebbaren Kolbenstangenabschnitts

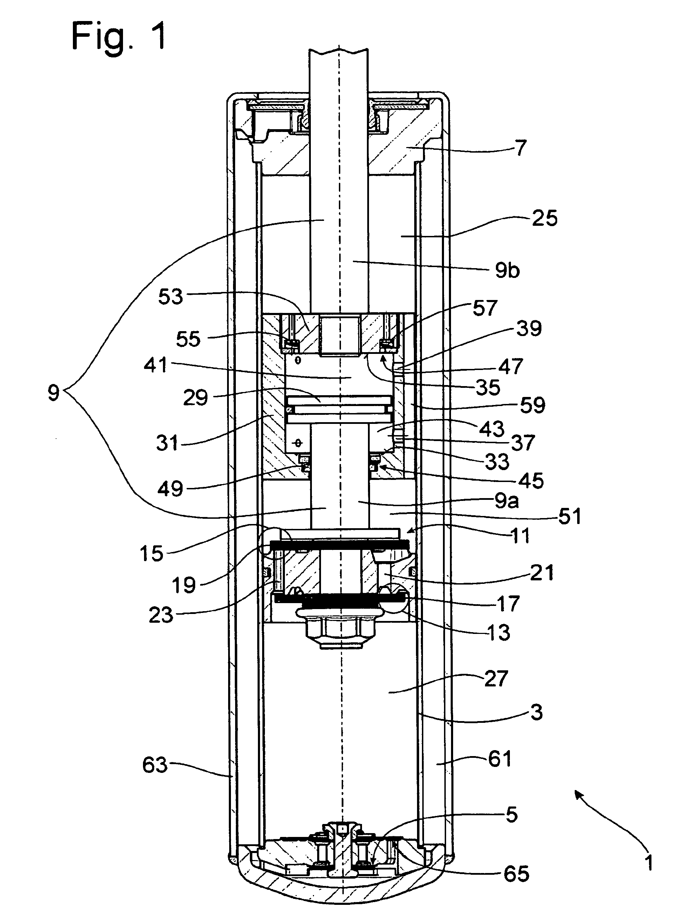

Die Figur 1 zeigt einen Schwingungsdämpfer 1 in Zweirohrbauweise, wobei man die Erfindung auch bei beliebig anderen Typen anwenden kann. Der Schwingungsdämpfer 1 umfasst einen Zylinder 3, der endseitig von einem Bodenventil 5 und einer Kolbenstangenführung 7 begrenzt wird. In dem Zylinder 3 ist eine zweigeteilte Kolbenstange 9 axial beweglich angeordnet. Die Kolbenstange umfasst einen ersten Abschnitt 9a, an dem ein Kolben 11 mit Dämpfventilen 13; 15 für beide Bewegungsrichtungen des Kolbens 11 befestigt ist, wobei die Dämpfventile von Ventilscheiben 17; 19 im Zusammenwirken mit Durchtrittskanälen 21; 23 gebildet werden. Der Kolben 11 unterteilt den Zylinder in einen vollständig mit Dämpfmedium gefüllten kolbenstangenseitigen Arbeitsraum 25 und einen kolbenstangenfernen Arbeitsraum 27. Das dem Kolben 11 gegenüberliegende Ende des ersten Kolbenstangenabschnitts 9a trägt einen Trennkolben 29, der in einem Gehäuse 31 an einem zweiten Kolbenstangenabschnitt 9b zwischen zwei Anschlagflächen 33; 35 des Gehäuses 31 axial beweglich ist.

In der hülsenförmigen Gehäusewandung sind mindestens zwei radiale Anschlusskanäle 37; 39 ausgeführt, die von dem Trennkolben 29 in Abhängigkeit seiner Stellung innerhalb des Gehäuses 31 in der Wirkungsweise eines Schieberventils freigegeben oder verschlossen werden können und die zusammen Drosselventile bilden.

Der Trennkolben 29 unterteilt das Gehäuse 31 in zwei Arbeitskammern 41; 43, wobei jeweils mindestens ein Anschlusskanal 37; 39 in einer Arbeitskammer mündet. Beide Arbeitskammern 41; 43 weisen ein in Zuströmrichtung in die Arbeitkammern öffnendes Rückschlagventil 45; 47 auf. Das Rückschlagventil 45 umfasst einen axial beweglichen Schaltring 49, der einen Zustrom von einem Zwischenraum 51 zwischen dem Kolben 11 und dem Gehäuse 31 mit der Arbeitskammer 43 zulässt. In einem zum Gehäuse 31 separaten Deckel 53 ist in dessen Stirnfläche das Rückschlagventil 41 angeordnet, das eine Ventilscheibe 55 aufweist, die von einer Federelement 57 in Schließrichtung vorgespannt wird.

Radial außerhalb der Arbeitskammern 41; 43 im Gehäuse 31 liegt mindestens ein Bypass 59 zwischen dem kolbenstangenseitigen Arbeitsraum 25 und dem Zwischenraum zwischen dem Gehäuse 31 und dem Kolben 11 vor. Der Bypass 59 wird von einer Axialnut in der Außenwandung des Gehäuses 31 gebildet.

Ausgehend von der dargestellten Mittenposition des Trennkolbens 29 behält der Kolben 11 seine momentane Position innerhalb des Zylinders 3 bei einer Einfahrbewegung des zweiten Kolbenstangenabschnitts 9b bei, wodurch der Trennkolben 29 jedoch eine Verschiebebewegung im Gehäuse 31 in Richtung der Anschlagfläche 35 ausführt. Dabei vergrößert sich der kolbenstangenseitige Arbeitsaum 25 und verkleinert sich der Zwischenraum 51. Dämpfmedium aus der Arbeitskammer 41 des Gehäuses kann durch den Anschlusskanal 39 in den kolbenstangenseitigen Arbeitsraum 25 nachströmen. Dämpfmedium aus dem Zwischenraum kann über den Anschlusskanal 37 in die sich vergrößernde Arbeitskammer 43 und über den Bypass 59 ebenfalls in den kolbenstangenseitigen Arbeitsraum 25 fließen. Wenn der Trennkolben 29 den Anschlusskanal 39 überfährt, wird durch die dann verstärkte Drosselwirkung die weitere Relativbewegung des ersten Kolbenstangenabschnitts 9a zum zweiten Kolbenstangenabschnitt 9b bis zur Blockade bedämpft. In Abhängigkeit der Kolbenstangeneinfahrgeschwindigkeit, der Drosselwirkung am Anschlusskanal 39, der Dämpfventilcharakteristik am Dämpfventil 19 des Kolbens 11 und dem Bodenventil 5 führen beide Kolbenstangenabschnitte 9a; 9b im weiteren eine synchrone Einfahrbewegung aus. Bei sehr langsamer Einfahrbewegung des zweiten Kolbenstangenabschnitts 9b erreicht der Trennkolben 29 die Anschlagfläche 35. Das dann in der weiteren Kolbenstangenbewegung verdrängte Volumen wird über das Bodenventil 5 in einen Ausgleichsraum 61 verdrängt, der zwischen einem Behälterrohr 63 und der äußeren Wandung des Zylinders 3 vorliegt.

Fährt der erste Kolbenstangenabschnitt 9b anschließend wieder aus, dann behält der Kolben 11 am ersten Kolbenstangenabschnitt 9a seine Momentanposition bei. Damit die Arbeitskammer 41 mit Dämpfmedium gefüllt werden kann, öffnet das Rückschlagventil 47 im Deckel 53. Nun wird Dämpfmedium aus der Arbeitskammer 43 über den Anschlusskanal 37 in den Zwischenraum 51 verdrängt. Wenn der Anschlusskanal 37 von dem Trennkolben 29 verschlossen wird, dann fährt der erste Kolbenstangenabschnitt 9a zusammen mit dem zweiten Kolbenstangenabschnitt 9b aus und eine erhöhte Dämpfkraft wird von dem Dämpfventil 13 bestimmt. In dieser Bewegungsphase kann Dämpfmedium aus dem Ausgleichsraum 61 in den kolbenstangenfernen Arbeitsraum 27 über ein Rückschlagventil 65 nachströmen.

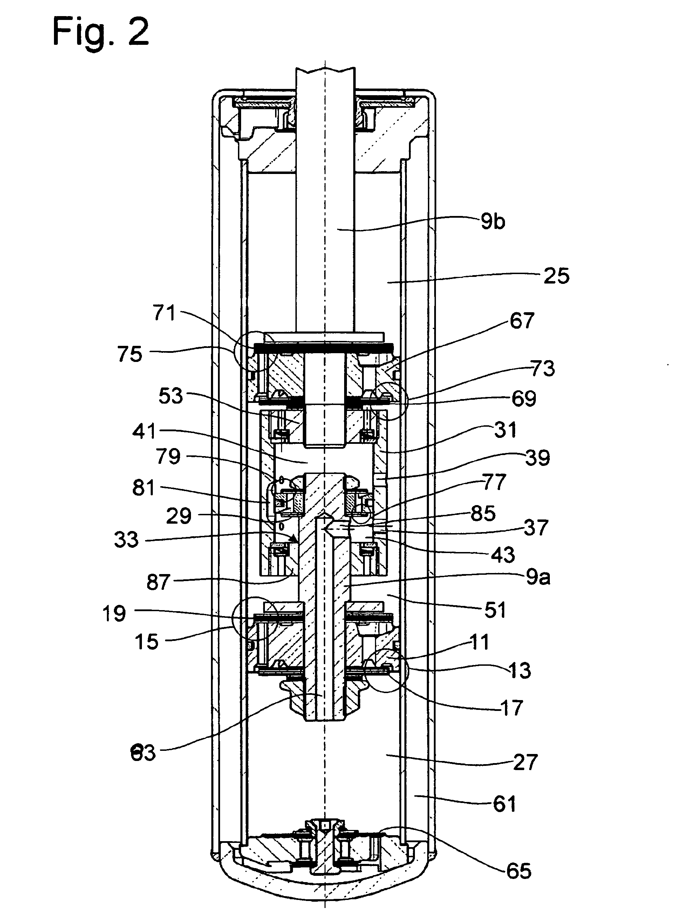

Das Ausführungsbeispiel nach Fig. 2 basiert auf der Fig. 1. Eine wesentliche Ergänzung zur Fig. 1 besteht darin, dass sowohl am Kolbenstangenabschnitt 9a wie auch am Kolbenstangenabschnitt 9b ein Kolben 11; 67 mit Ventilscheiben 17; 19, 69; 71 angeordnet sind, so dass für beide Bewegungsrichtungen der Kolbenstangenabschnitte 9a; 9b Dämpfventile 13; 15; 73; 75 zur Verfügung stehen. Daraus resultiert eine Grunddämpfung bei jeder Bewegung des Kolbenstangenabschnitts 9b.

Eine weitere Ergänzung zur Fig. 1 ist im Trennkolben 29 enthalten, die unabhängig von den Dämpfventilen 73; 75 im zweiten Kolben 67 zu sehen ist. Der Trennkolben 29 gemäß der Fig. 2 ist für mindestens eine Relativbewegungsrichtung zum Gehäuse 31 mit einem Dämpfventil 77; 79 bestückt. Wenn der Trennkolben 29 bei einer Federungsbewegung einen der Anschlusskanäle 37; 39 passiert hat, dann kann das Dämpfmedium aus der jeweils komprimierten Arbeitskammer 41; 43 durch eines der Dämpfventile 77; 79 verdrängt werden. Dadurch wird eine zusätzliche Dämpfung der Trennkolbenbewegung und damit der Relativbewegung zwischen den Kolbenstangenabschnitten 9a; 9b erreicht. Mit der zusätzlichen Dämpfung im Trennkolben 29 wird auch eine äußere Dämpfkraft erzielt.

Eine weitere Maßnahme im Vergleich zur Fig. 1 besteht darin, dass über einen Verbindungskanal 81 zwischen den beiden Arbeitskammern 41; 43 die Wirkung des Trennkolbens 29 überbrück werden kann. Der Verbindungskanal 81 wird von einer Nut in der Gehäuseinnenwand gebildet, wobei die Länge des Verbindungskanals kürzer ist als der Abstand zwischen den beiden Anschlusskanälen 37; 39.

Die Arbeitskammern 41; 43 im Gehäuse 31 ändern sich hinsichtlich ihres Volumens bei einer Trennkolbenbewegung unterschiedlich. Die Volumenänderung der Arbeitskammer 43 wird von dem Gehäuseinnendurchmesser und dem Außendurchmesser des Kolbenstangenabschnitts 9a bestimmt. Abweichend dazu berechnet sich die Volumenänderung der Arbeitskammer 41 ausschließlich über den Gehäuseinnendurchmesser. Je größer der Außendurchmesser des Kolbenstangenabschnitts 9a ist, umso stärker differieren die Volumenänderungen bei einer Trennkolbenbewegung. Um die unterschiedlichen Volumenänderungen kompensieren zu können, verfügt der Kolbenstangenabschnitt 9a über einen Ausgleichskanal 83, der über eine Radialöffnung 85 den Arbeitsraum 27 mit der Arbeitskammer 43 im Gehäuse 31 verbindet. Sämtliche Volumenänderungen in den Arbeitskammern 41; 43, aber auch im Zwischenraum 51 können über den Ausgleichskanal 83 in Verbindung mit den Anschlusskanälen 37; 39 und ggf. dem Verbindungskanal 81 nachgeführt werden, so dass weder in den Arbeitskammern 41; 43 noch Arbeitsräumen 25; 27; 51 eine Dämpfmediumunterversorgung auftreten kann.

Wenn z. B. der Kolbenstangenabschnitt 9b in den Zylinder 3 einfährt, dann bewegt sich das Gehäuse 31 synchron in Richtung des Kolbens 11. Je nach Abstimmung der Anschlusskanäle 37; 39 und vor allem des Dämpfventils 71 im Kolben 67 wird Dämpfmedium aus dem Zwischenraum 51 in den oberen Arbeitsraum 25 verdrängt. Wenn die Kolbenstangenabschnitte 9a; 9b einen identischen Außendurchmesser aufweisen, dann muss nur noch der Volumenunterschied zwischen den beiden Arbeitskammern 41; 43 über den Ausgleichskanal 83 aus dem unteren Arbeitsraum 27 nachgeführt werden, der wiederum über das Rückschlagventil 65 mit Dämpfmedium aus dem Ausgleichsraum 61 versorgt werden kann.

Sobald der Trennkolben 29 die Nut 81 und den Anschlusskanal 39 passiert hat, wird die weitere Trennkolbenbewegung deutlich gedrosselt, wobei zusätzlich das Dämpfventil 85 im Trennkolben 29 einsetzt. Bei einer weiteren Einschubbewegung des Kolbenstangenabschnitts 9b erreicht der Trennkolben 29 seine obere Endlage am Deckel 53. Setzt sich die Einschubbewegung noch weiter fort, dann setzt spätestens der Kolben 11 mit dem Dämpfventil 19 ein und bewegt sich zusammen mit dem Kolbenstangenabschnitt 9b.

Fährt der Kolbenstangenabschnitt 9b aus, dann entfernt sich der Trennkolben 29 bei stillstehendem Kolbenstangenabschnitt 9a. Die Arbeitskammer 41 kann über das Rückschlagventil 47 geflutet werden, ohne dass in der Arbeitskammer 41 ein Unterdruck auftreten kann. Aufgrund der Verbindung der beiden Arbeitskammern 41; 43 über die Anschlusskanäle 37; 39 und/oder die Nut 81 setzt der Trennkolben 29 bei weiterer Ausfahrbewegung des Kolbenstangenabschnitts 9b seine Relativbewegung zum Gehäuse 31 in Richtung der Anschlagfläche 33 fort. Der sich dabei vergrößernde Arbeitskammer 41 kann Dämpfmedium aus dem Arbeitsraum 27 über den Ausgleichskanal 83 nachgefüllt werden. Um eine Dämpfmediumüberbrückung des Kolbens 11 zu verhindern, wird die Radialöffnung 85 von einem Deckel 87 des Gehäuses in der Funktion eines Schieberventils 89 verschlossen. Das gesamte verdrängte Volumen aus dem oberen Arbeitsraum 25 muss nun durch das Dämpfventil 69 im Kolben 67 und dem in Reihe nachordneten Kolben 11 mit seinem Dämpfventil 17 fließen, womit eine Dämpfkraftsteigerung bei konstanter Kolbenstangenbewegung erreicht wird.

## Patentansprüche

1. Schwingungsdämpfer (1), umfassend einen Zylinder (3) , in dem eine Kolbenstange (9) axial beweglich angeordnet ist, wobei ein Kolben (11), der den dämpfmediumgefüllten Zylinder (3) in zwei Arbeitsräume (25; 27) unterteilt, mit Ventilscheiben (17; 19) bestückt ist, in Grenzen eine axiale Relativbewegung zu der Kolbenstange (9b) ausführen kann und am Ende der Relativbewegung eine Dämpfkraftsteigerung vorliegt,
**dadurch gekennzeichnet,**
**dass** die Kolbenstange (9) zweigeteilt ausgeführt ist und der Kolben (11) an einem ersten Kolbenstangenabschnitt (9a) fixiert ist, dessen anderes Ende in einem Gehäuse (31) an einem zweiten Kolbenstangenabschnitt (9b) zwischen zwei Anschlagflächen (33; 35) beweglich ist.

2. Schwingungsdämpfer nach Anspruch 1,
**dadurch gekennzeichnet,**
**dass** der erste Kolbenstangenabschnitt (9a) einen Trennkolben (29) trägt, der mit mindestens einem Anschlusskanal (37; 39) in der Wandung des Gehäuses (31) ein Drosselventil bildet.

3. Schwingungsdämpfer nach Anspruch 1,
**dadurch gekennzeichnet,**
**dass** mindestens eine Arbeitskammer (41; 43) des Gehäuses (31) ein in Zuströmrichtung in die Arbeitskammer (41; 43) öffnendes Rückschlagventil (45; 47) aufweist.

4. Schwingungsdämpfer nach Anspruch 3,
**dadurch gekennzeichnet,**
**dass** das Gehäuse (31) einen separaten Deckel (53) aufweist, in dessen Stirnfläche das Rückschlagventil (47) angeordnet ist.

5. Schwingungsdämpfer nach Anspruch 3,
**dadurch gekennzeichnet,**
**dass** außerhalb der mindestens einen Arbeitskammer (41; 43) mindestens ein Bypass (59) zwischen einem der Arbeitsräume (25) im Zylinder (3) und einem Zwischenraum (51) zwischen dem Gehäuse (31) und dem Kolben (11) vorliegt.

6. Schwingungsdämpfer nach Anspruch 5,
**dadurch gekennzeichnet,**
**dass** der Bypass (59) von einer Axialnut in der Außenwandung des Gehäuses (31) gebildet wird.

7. Schwingungsdämpfer nach Anspruch 1,
**dadurch gekennzeichnet,**
**dass** an beiden Kolbenstangenabschnitten (9a; 9b) jeweils ein Kolben (11; 67) mit Ventilscheiben (17; 19; 69; 71) angeordnet ist.

8. Schwingungsdämpfer nach Anspruch 1,
**dadurch gekennzeichnet,**
**dass** mindestens eine Arbeitskammer (41; 43) des Gehäuses (31) über einen Ausgleichskanal (83; 85) in einem Kolbenstangenabschnitt (9a) mit einem der Arbeitsräume (27) verbunden ist.

9. Schwingungsdämpfer nach Anspruch 8,
**dadurch gekennzeichnet,**
**dass** der Ausgleichskanal (83; 85) wegabhängig freigegeben wird.

10. Schwingungsdämpfer nach Anspruch 8,
**dadurch gekennzeichnet,**
**dass** der Ausgleichskanal (83; 85) eine Radialöffnung (85) aufweist, die mit einem Deckel (87) des Gehäuses (31) ein Schieberventil bildet.

11. Schwingungsdämpfer nach Anspruch 2,
**dadurch gekennzeichnet, dass** der Trennkolben (29) des Gehäuse (31) in zwei Arbeitskammern (41; 43) unterteilt, wobei zwischen den beiden Arbeitskammern (41; 43) ein Verbindungskanal (81) besteht.

12. Schwingungsdämpfer nach Anspruch 11,
**dadurch gekennzeichnet,**
**dass** der Verbindungskanal (81) von einer Nut im Gehäuse (31) gebildet wird.

13. Schwingungsdämpfer nach Anspruch 12,
**dadurch gekennzeichnet,**
**dass** der Verbindungskanal (81) eine kürzere axial Erstreckung aufweist als der Abstand der beiden Anschlusskanäle (37; 39) der Arbeitskammern (41; 43).

14. Schwingungsdämpfer nach Anspruch 2,
**dadurch gekennzeichnet,**
**dass** der Trennkolben (29) zumindest für eine Relativbewegungsrichtung zum Gehäuse (31) mit einem Dämpfventil (77; 79) bestückt ist.

## Claims

1. Vibration damper (1), comprising a cylinder (3) in which a piston rod (9) is arranged axially movably, a piston (11), which subdivides the damping medium-filled cylinder (3) into two working spaces (25; 27), being equipped with valve discs (17; 19) and being capable of executing, within limits, an axial relative movement with respect to the piston rod (9b), and a damping-force increase occurring at the end of the relative movement, **characterized in that** the piston rod (9) is of two-part design, and the piston (11) is fixed to a first piston-rod portion (9a), the other end of which is movable between two stop faces (33; 35) in a housing (31) on a second piston-rod portion (9b).

2. Vibration damper according to Claim 1, **characterized in that** the first piston-rod portion (9a) carries a separating piston (29) which, with at least one connecting duct (37; 39) in the wall of the housing (31), forms a throttle valve.

3. Vibration damper according to Claim 1, **characterized in that** at least one working chamber (41; 43) of the housing (31) has a non-return valve (45; 47) opening into the working chamber (41; 43) in the inflow direction.

4. Vibration damper according to Claim 3, **characterized in that** the housing (31) has a separate cover (53), in the end face of which the non-return valve (47) is arranged.

5. Vibration damper according to Claim 3, **characterized in that** at least one bypass (59) is present, outside the at least one working chamber (41; 43), between one of the working spaces (25) in the cylinder (3) and an interspace (51) between the housing (31) and the piston (11).

6. Vibration damper according to Claim 5, **characterized in that** the bypass (59) is formed by an axial groove in the outer wall of the housing (31).

7. Vibration damper according to Claim 1, **characterized in that** a piston (11; 67) having valve discs (17; 19; 69; 71) is arranged on each of the two piston-rod portions (9a; 9b).

8. Vibration damper according to Claim 1, **characterized in that** at least one working chamber (41; 43) of the housing (31) is connected to one of the working spaces (27) via a compensating duct (83; 85) in a piston-rod portion (9a).

9. Vibration damper according to Claim 8, **characterized in that** the compensating duct (83; 85) is released in a displacement-dependent manner.

10. Vibration damper according to Claim 8, **characterized in that** the compensating duct (83; 85) has a radial orifice (85) which with a cover (87) of the housing (31) forms a slide valve.

11. Vibration damper according to Claim 2, **characterized in that** the separating piston (29) subdivides the housing (31) in two working chambers (41; 43), a connecting duct (81) being present between the two working chambers (41; 43).

12. Vibration damper according to Claim 11, **characterized in that** the connecting duct (81) is formed by a groove in the housing (31).

13. Vibration damper according to Claim 12, **characterized in that** the connecting duct (81) has a shorter axial extent than the distance between the two connecting ducts (37; 39) of the working chambers (41; 43).

14. Vibration damper according to Claim 2, **characterized in that** the separating piston (29) is equipped with a damping valve (77; 79) at least for one relative movement direction with respect to the housing (31).

## Revendications

1. Amortisseur d'oscillations (1) comprenant un cylindre (3), dans lequel est disposée, de manière déplaçable axialement, une tige de piston (9), un piston (11), qui divise le cylindre (3) rempli de fluide d'amortissement en deux espaces de travail (25 ; 27) étant muni de disques de soupape (17 ; 19) et pouvant effectuer dans certaines limites un mouvement relatif axial par rapport à la tige de piston (9b), et une augmentation de la force d'amortissement se produisant à la fin du mouvement relatif,
**caractérisé en ce que**
la tige de piston (9) est réalisée en deux parties et le piston (11) est fixé à une première portion de la tige de piston (9a), dont l'autre extrémité est déplaçable dans un boîtier (31) sur une deuxième portion de la tige de piston (9b) entre deux surfaces de butée (33 ; 35).

2. Amortisseur d'oscillations selon la revendication 1,
**caractérisé en ce que**
la première portion de tige de piston (9a) porte un piston de séparation (29), qui forme avec au moins un canal de raccordement (37 ; 39) une soupape d'étranglement dans la paroi du boîtier (31).

3. Amortisseur d'oscillations selon la revendication 1,
**caractérisé en ce**
**qu'**au moins une chambre de travail (41 ; 43) du boîtier (31) présente une soupape de non retour (45 ; 47) s'ouvrant dans la direction d'afflux dans la chambre de travail (41 ; 43).

4. Amortisseur d'oscillations selon la revendication 3,
**caractérisé en ce que**
le boîtier (31) présente un couvercle séparé (53), dans la surface frontale duquel est disposée la soupape de non retour (47).

5. Amortisseur d'oscillations selon la revendication 3,
**caractérisé en ce**
**qu'**en dehors de l'au moins une chambre de travail (41 ; 43), il existe au moins une dérivation (59) entre l'un des espaces de travail (25) dans le cylindre (3) et un espace intermédiaire (51) entre le boîtier (31) et le piston (11).

6. Amortisseur d'oscillations selon la revendication 5,
**caractérisé en ce que**
la dérivation (59) est formée par une rainure axiale dans la paroi extérieure du boîtier (31).

7. Amortisseur d'oscillations selon la revendication 1,
**caractérisé en ce que**
l'on dispose sur les deux portions de tige de piston (9a ; 9b) à chaque fois un piston (11 ; 67) avec des disques de soupape (17 ; 19 ; 69 ; 71).

8. Amortisseur d'oscillations selon la revendication 1,
**caractérisé en ce**
**qu'**au moins une chambre de travail (41 ; 43) du boîtier (31) est connectée à l'un des espaces de travail (27) par le biais d'un canal d'équilibrage (83 ; 85) dans une portion de la tige de piston (9a).

9. Amortisseur d'oscillations selon la revendication 8,
**caractérisé en ce que**
le canal d'équilibrage (83 ; 85) est libéré en fonction de la course.

10. Amortisseur d'oscillations selon la revendication 8,
**caractérisé en ce que**
le canal d'équilibrage (83 ; 85) présente une ouverture radiale (85), qui forme avec un couvercle (87) du boîtier (31) une soupape à tiroir.

11. Amortisseur d'oscillations selon la revendication 2,
**caractérisé en ce que**
le piston de séparation (29) divise le boîtier (31) en deux chambres de travail (41 ; 43), un canal de connexion (81) existant entre les deux chambres de travail (41 ; 43).

12. Amortisseur d'oscillations selon la revendication 11,
**caractérisé en ce que**
le canal de connexion (81) est formé par une rainure dans le boîtier (31).

13. Amortisseur d'oscillations selon la revendication 12,
**caractérisé en ce que**
le canal de connexion (81) présente une étendue axiale plus courte que la distance des deux canaux de raccordement (37 ; 39) des chambres de travail (41 ; 43).

14. Amortisseur d'oscillations selon la revendication 2,
**caractérisé en ce que**
le piston de séparation (29) est muni d'une soupape d'amortissement (77 ; 79) au moins pour un sens de déplacement relatif vers le boîtier (31).
